Europäisches Patentamt

European Patent Office

Office européen des brevets

(11) Veröffentlichungsnummer: **0 434 602 A1**

(12) **EUROPÄISCHE PATENTANMELDUNG**

(21) Anmeldenummer: **90810835.0**

(22) Anmeldetag: **31.10.90**

(51) Int. Cl.5: **F23G 5/46**

(30) Priorität: **17.11.89 CH 4141/89**

(43) Veröffentlichungstag der Anmeldung:
**26.06.91 Patentblatt 91/26**

(84) Benannte Vertragsstaaten:
**AT CH DE FR GB IT LI**

(71) Anmelder: **KOENIG AG**
**St. Gallerstrasse 2**
**CH-9320 Arbon(CH)**

(72) Erfinder: **Natter, Arthur**
**Unterfeldstrasse 11**
**A-6922 Wolfurt(AT)**

(74) Vertreter: **Münch, Otto et al**
**Patentanwalts-Bureau Isler AG Postfach 6940**
**CH-8023 Zürich(CH)**

(54) **Wärmerückgewinnungseinrichtung und Anlage zur Reinigung von Abluft durch thermische Nachverbrennung.**

(57) Die Anlage besteht aus einer thermischen Nachverbrennungseinrichtung (37) und einem Dampfkessel (1). In der Einrichtung (37) wird schadstoffbelastete Abluft aus einer Quelle (30), z.B. einem Spannrahmen, auf etwa 750° Celsius erhitzt, so dass sämtliche organischen Schadstoffe in der Abluft verbrennen. Das Reingas wird über einen Gas-Wasser-Rippenrohwärmetauscher (50) abgekühlt. Der Wärmetauscher (50) wird wasserseitig durch eine Pumpe (55) mit Wasser (9) aus dem Kessel (1) beschickt. Der wasserseitige Austritt (56) des Wärmetauschers (50) ist über ein Druckreduzierventil (61) und eine Trenneinrichtung (75) mit dem Kessel (1) verbunden. Das Ventil (61) ist so eingestellt, dass der Wasserdruck im Wärmetauscher (50) über dem Dampfdruck ist. Durch diese Anlage kann mit der Abwärme der Einrichtung (37) kostengünstig und bei geringem Raumbedarf Dampf erzeugt werden.

Fig. 1

EP 0 434 602 A1

## WÄRMERÜCKGEWINNUNGSEINRICHTUNG UND ANLAGE ZUR REINIGUNG VON ABLUFT DURCH THERMISCHE NACHVERBRENNUNG

Eine thermische Nächverbrennungseinrichtung (TNV) ist in den VDI-Richtlinien 2442 vom Juni 1987 beschrieben. Bei dieser Anlage wird die zu reinigende Abluft zunächst über einen Wärmetauscher erhitzt und einem Brenner als Verbrennungsluft zugeführt, der mit hohem Luftüberschuss arbeitet und in einer Brennkammer eine Temperatur von etwa 750° C aufrecht erhält. Das Reingas wird im gleichen Wärmetauscher im Gegenstrom zur Abluft abgekühlt und verlässt diesen Wärmetauscher mit einer Temperatur von etwa 400° C. Es ist bekannt, mit diesem heissen Reingas einen Abhitze-Dampfkessel zu betreiben, um seinen Wärmeinhalt zurückzugewinnen. Allerdings sind diese Abhitze-Dampfkessel teuer und sehr voluminös. Oft muss für sie ein separater Bau aufgestellt werden, was hohe Investitionen erfordert.

Der vorliegenden Erfindung liegt die Aufgabe zugrunde, eine preiswertere Lösung zur Wärmerückgewinnung von heissen Gasen, z.B. von einer TNV, zu schaffen. Diese Aufgabe wird durch die Merkmalskombination gemäss den Ansprüchen 1 und 9 gelöst.

Der erfindungsgemässen Lösung liegt die Erkenntnis zugrunde, das bei Anlagen, in welchen die Wärmerückgewinnung durch Dampferzeugung realisiert werden kann, ein Bedarf an Dampf und deshalb ein Dampfkessel vorhanden sein muss. Die erfindungsgemässe Lösung schliesst die Heissgasquelle, z.B. eine TNV elegant an diesen vorhandenen Dampfkessel an und ermöglicht damit die Wärmerückgewinnung aus dem Heissgas, z.B. dem Reingas der TNV mit geringem Kostenaufwand und Raumbedarf. Während ein herkömmlicher Abhitze-Dampfkessel beispielsweise etwa 4,5 m lang, 2 m hoch und 1,5 m breit ist, ist ein Rippenrohrwärmetauscher zur Uebertragung der gleichen Leistung nur etwa 1,2 m lang, 1,5 m breit und 1 m hoch, also volumenmässig etwa 7,5 mal kleiner und entsprechend billiger. Der grosse Unterschied im Raumbedarf und im Preis beruht vor allem auf folgenden Unterschieden:

Der Abhitzedampfkessel besteht aus einem zylindrischen Kesselkörper. Der Kesselkörper ist mit Glattrohren bestückt. Diese Glattrohre bilden die Wärmeübertragungsfläche. Um die Rohre herum befindet sich das zu verdampfende Wasser. Ueber dem Wasserspiegel befindet sich der Dampfraum mit einem Dampfdom zur Sattdampfentnahme. Das Heissgas strömt durch die Rohre und kühlt sich dabei ab. Auf der Rohrinnenseite ergeben sich sehr geringe Wärmeübertragungswerte, wogegen auf der Wasserseite je nach treibender Temperaturdifferenz relativ hohe Wärmeübertragungswerte (Blasenverdampfung) erzielt werden. Typische Werte sind: $\alpha_i$ = 30 kcal/m²h°C, $\alpha_a$ 3000 kcal/m²h°C. Der Wärmeübergangswert (K-Wert) liegt also in der Nähe des $\alpha_i$-Wertes. Daraus resultiert eine grosse Wärmeübertragungsfläche und somit ein relativ teurer Apparat. Der Abhitzekessel ist als Ganzes unter Druck gesetzt und muss deshalb mit seinem grossen Volumen den Sicherheitsvorschriften genügen.

Beim Rippenrohrwärmetauscher strömt dagegen das Wasser durch das Innere der Rohre. Das Heissgas strömt auf der Aussenseite der Rohre. Der schlechte gasseitige Wärmeübertragungswert wird mit einer Vergrösserung der Uebertragungsfläche mittels Rippen kompensiert. Somit kann auf geringem Raum ein grosser Wärmestrom übertragen werden. Das unter Druck stehende Volumen, nämlich der Innenraum der Rohre, ist wesentlich kleiner und ausserdem durch eine zweite Ummantelung, nämlich das Gehäuse des Wärmetauschers, geschützt. Dadurch sind die Sicherheitsanforderungen wesentlich geringer.

Um die Dampfbildung im Rippenrohrwärmetauscher zu verhindern, ist es erforderlich, den Wasserdruck im Wärmetauscher wesentlich über den Druck im Dampfkessel anzuheben. Dazu dient die Pumpe und die Druckmindereinrichtung. Das Wasser wird im Rippenrohr wärmetauscher über die Siedetemperatur bei Kesseldruck erhitzt. Stromabwärts der Druckmindereinrichtung verdampft deshalb ein Teil des Wassers. Besonders zweckmässig ist es, Wasser und Dampf stromabwärts der Druckmindereinrichtung zu trennen und durch separate Leitungen in den Wasser-Dampf-Kreislauf des Dampfkessels zurückzuführen. Dadurch kann eine Störung der natürlichen Wasser-Konvektion im Kessel vermieden werden.

Nachfolgend werden Ausführungsbeispiele der Erfindung anhand der Zeichnung erläutert. Darin zeigt:

Fig. 1 ein Schema einer ersten Ausführungsform einer erfindungsgemässen Anlage,

Fig. 2 ein Schema einer zweiten Ausführungsform, und

Fig. 3 einen Ausschnitt aus einer dritten Ausführungsform.

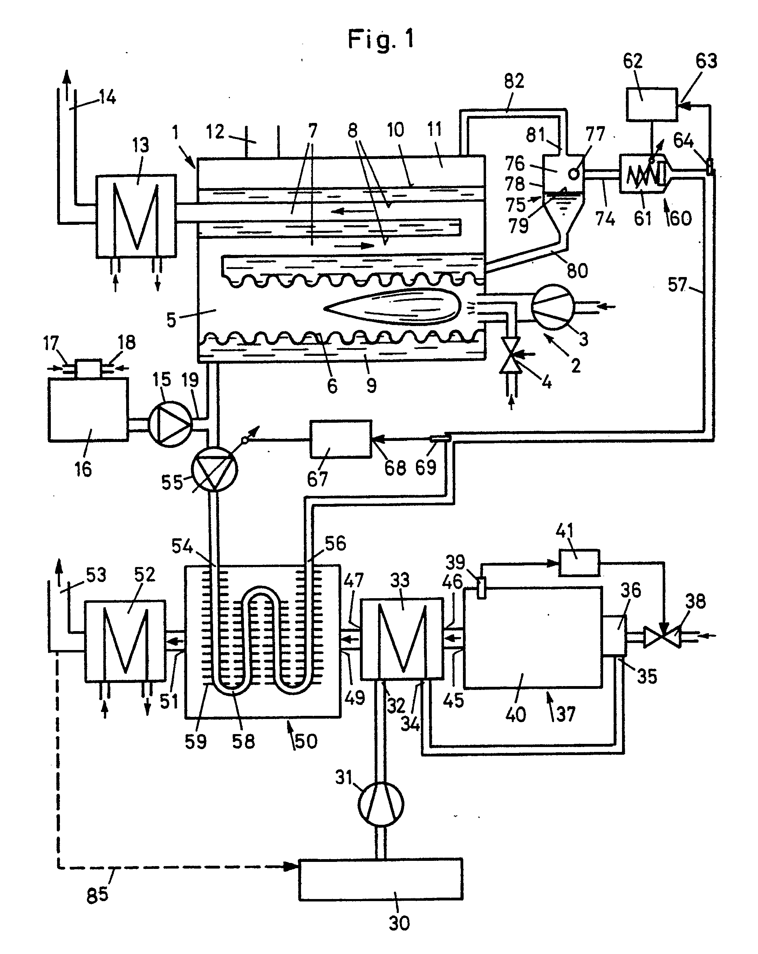

In Figur 1 ist ein Schema einer erfindungsgemässen Anlage dargestellt. Ein 3-Zug-Dampfkessel 1 hat einen Brenner 2 mit einem Verbrennungsluftgebläse 3 und einem Brennstoffregelventil 4. Der Brenner 2 fördert das Brennstoff-Luft-Gemisch in eine Brennkammer 5 mit Strahlungsheizflächen 6, wo der Brennstoff verbrennt. Die Brennkammer 5 ist mit einem Rauchgaskanal 7 mit Konvektionsheizflächen 8 verbunden. Die Heizflächen 6, 8 sind umgeben von im Betrieb des Brenners 2 siedendem Wasser 9. Oberhalb der Wasseroberfläche 10 im Kessel 1 sammelt sich der Dampf in einem Dampfraum 11 und wird durch einen Dampfanschluss 12 abgeleitet. Brennstoffzufuhr über das Ventil 4 und Luftzufuhr zum Brenner 2 sind durch den Dampfdruck geregelt. Das Rauchgas durchströmt noch einen Wärmetauscher 13 zur Erwärmung von Speisewasser oder Brauchwasser und entweicht schliesslich durch einen Kamin 14. Das Speisewasser wird dem Kessel 1 durch eine Pumpe 15 aus einem Speisewasserbehälter 16 zugeführt, wobei die Pumpe 15 in Abhängigkeit des Niveaus der Wasseroberfläche 10 ein- und ausgeschaltet wird. Der Behälter 16 erhält Frischwasser über einen Anschluss 17 und Kondensat über einen Anschluss 18. Die Pumpe 15 fördert das Speisewasser über eine Leitung 19 in den Kessel 1.

Von einer Schadstoffquelle 30, z.B. einem Spannrahmen einer Textilveredelungsanlage oder einer Teppichbeschichtungsanlage wird die mit organischen Schadstoffen belastete Abluft mittels eines Gebläses 31 abgesaugt und in einen Ablufteintritt 32 eines Gas-Gas-Wärmetauschers 33 gefördert. Der Abluftaustritt 34 des Wärmetauschers 33 ist mit dem Verbrennunglufteintritt 35 eines Brenners 36 einer thermischen Nachverbrennungseinrichtung 37 verbunden. Der Brenner 36 erhält Brennstoff, vorzugsweise Erdgas durch ein Regelventil 38, das durch einen Temperaturfühler 39 in der Brennkammer 40 der Einrichtung 37 über einen Regler 41 so geregelt ist, dass die Temperatur in der Brennkammer 40 etwa 750° Celsius beträgt. Der Reingasaustritt 45 der Brennkammer 40 ist mit dem zweiten Eingang 46 des Wärmetauschers 35 verbunden. Der Reingasaustritt 47 des Wärmetauschers 35 ist an den gasseitigen Eintritt 49 eines Gas-Wasser-Rippenrohrwärmetaschers 50 angeschlossen. Dessen gasseitiger Ausgang 51 führt über einen weiteren Wärmetauscher 52 zur Erwärmung von Speise- oder Brauchwasser oder eines Wärmeträgeröls in einen weiteren Kamin 53. Der wasserseitige Eingang 54 des Wärmetauschers 50 wird über eine Pumpe 55 versorgt, die saugseitig an die Speisewasserleitung 19 und damit an den Wasserraum 9 des Kessels 1 angeschlossen ist. Der Wasseraustritt 56 des Wärmetauschers 50 ist über eine Leitung 57 mit einer Druckmindereinrichtung 60 verbunden. Das Wasser durchströmt den Wärmetauscher 50 in Rohren 58, die zur Vergrösserung der Wärmeübertragungsfläche gasseitig mit Rippen 59 versehen sind.

Im dargestellten Ausführungsbeispiel besteht die Einrichtung 60 aus einem regelbaren Druckreduzierventil 61. Das Ventil 61 wird durch einen Regler 62 geregelt. Der Eingang 63 des Reglers 62 ist mit einem Temperaturfühler 64 verbunden, der die Wassertemperatur in der Leitung 57 misst. Der Regler 62 ist so eingestellt, dass der durch das Druckreduzierventil 61 aufrechterhaltende Druck in der Leitung 57 und damit in den Rohren 58 des Wärmetauschers 50 über dem Dampfdruck bei der gemessenen Wassertemperatur ist. Dadurch wird ein Sieden des Wassers im Wärmetauscher 50 verhindert.

Zusätzlich oder anstelle der Regelung des Druckreduzierventils 61 kann auch die Pumpe 55 regelbar sein, z.B. indem sie durch einen drehzahlregelbaren Motor angetrieben ist. Die Stellgrösse für die Pumpenverstellung wird durch einen weiteren Regler 67 geliefert. Der Eingang 68 des Reglers 67 ist an einen Temperaturfühler 69 angeschlossen, der die Wassertemperatur in der Leitung 57 misst. Wenn die anfallende Abwärme z.B. durch einen höheren Gasdurchsatz oder eine höhere Gastemperatur am Eintritt 49 des Wärmetauschers 50 steigt, wird entsprechend durch den Regler 67 die Fördermenge der Pumpe 55 derart erhöht, dass die Wassertemperatur in der Leitung 57 und damit in den Rohren 58 des Wärmetauschers 50 unterhalb der Siedetemperatur bei dem durch das Druckreduzierventil 61 gehaltenen Druck bleibt.

Der Austritt 74 des Druckreduzierventils 61 ist an eine Trenneinrichtung 75 zum Trennen von Wasser und Dampf angeschlossen. Die Einrichtung 75 ist ein Zentrifugalabscheider mit einer kreiszylindrischen Wirbelkammer 76 mit senkrechter Achse. Sie ist etwa auf der Höhe der Wasseroberfläche 10 im Dampfkessel 1 angeordnet. Der Austritt 74 mündet tangential in einer Oeffnung 77 in der Kammerwand 78 oberhalb der Wasseroberfläche 79 in der Kammer 79. Die Kammer 76 ist unten trichterförmig verjüngt und mündet in einer Leitung 80, die an den Wasserraum 9 des Dampfkessels 1 angeschlossen ist. Die Kammer 76 hat oben zentrisch einen Dampfausgang 81, der über eine weitere Leitung 82 mit dem Dampfraum 11 des Kessels 1 verbunden ist. Wegen dieser Komunikation der Kammer 76 mit dem Wasserraum 9 und dem Dampfraum 11 sind die Wasseroberflächen 10, 79 bei ruhender Anlage auf gleichem Niveau.

Im Betrieb arbeitet die beschriebene Anlage wie folgt: Die schadstoffbelastete Abluft mit einer Temperatur von z.B. 130° Celsius aus der Quelle 30 wird mittels des Gebläses 31 mit einem Durchsatz von z.B. 16 t/h durch den Wärmetauscher 33 gefördert und darin z.B. auf 480° Celsius erhitzt. Im Brenner 36 wird dieser Abluft Brennstoff in einer durch den Regler 41 derart geregelten Menge beigemischt, dass in der Brennkammer 40 eine Temperatur von etwa 750° Celsius aufrechterhalten wird. Das aus dem Austritt 45 austretende Reingas wird im Wärmetauscher 33 im Gegenstrom zur Abluft auf etwa 400° Celsius abgekühlt. Im Rippenrohr-Wärmetauscher 50 erfolgt eine weitere Abkühlung auf etwa 210° Celsius. Durch die Pumpe 55 werden etwa 32 t/h Wasser von 170° Celsius bei 8 bar aus dem Kessel 1 angesaugt und der Druck auf z.B. 12,5 bar erhöht. Das geförderte Wasser wird im Wärmetauscher 50 auf etwa 190° Celsius erhitzt. Nach der Druckabsenkung im Druckreduzierventil 61 verdampft ein Teil dieses Wassers. In der Wirbelkammer 76 wird durch Zentrifugalwirkung das durch die Verdampfung wieder auf 170° Celsius abgekühlte Wasser vom Dampf getrennt. Es werden so etwa 1,3 t/h Dampf produziert und der Kesselbrenner 2 entsprechend entlastet. Durch die getrennte Einleitung von Wasser und Dampf in den Kessel 1 wird eine Störung der Wasserzirkulation im Kessel 1 weitgehend vermieden.

Statt des Druckreduzierventils 61 kann als Druckmindereinrichtung 60 auch eine feste oder regelbare Blende eingesetzt werden. Falls die Nachverbrennungseinrichtung 37 relativ weit vom Kessel 1 entfernt aufgestellt wird, kann die Dampfleitung 82 aus der Trenneinrichtung 75 auch direkt ans Dampfleitungsnetz oder an einen örtlichen Verbraucher angeschlossen werden. Die Wasser-Rückleitung 80 wird in diesem Falle zweckmässig direkt mit der Saugseite der Pumpe 55 verbunden. Der Reingasaustritt des Wärmetauschers 52 kann mit der Schadstoffquelle 30, z.B. einem Spannrahmen, verbunden sein, was durch die gestrichelt gezeichnete Leitung 85 angedeutet ist, um dem Spannrahmen heisse Luft zuzuführen. Zwischen dem Austritt 47 und dem Eintritt 49 wird zweckmässig noch ein Anschluss an einen Kamin eingebaut und mit einer Klappe betätigt. Für seltene Fälle, in welchen kein Bedarf an Dampf besteht, kann dann das aus dem Wärmetauscher 33 austretende Reingas ins Freie abgeleitet werden. Unter Umständen kann es auch zweckmässig sein, den Ausgang 51 des Wärmetauschers 50 mit dem Rauchgaskanal 7 am Austritt aus dem Kessel 1 zu verbinden, so dass das Reingas zusammen mit dem Rauchgas im Wärmetauscher 13 gekühlt wird und der Wärmetauscher 52 entfällt.

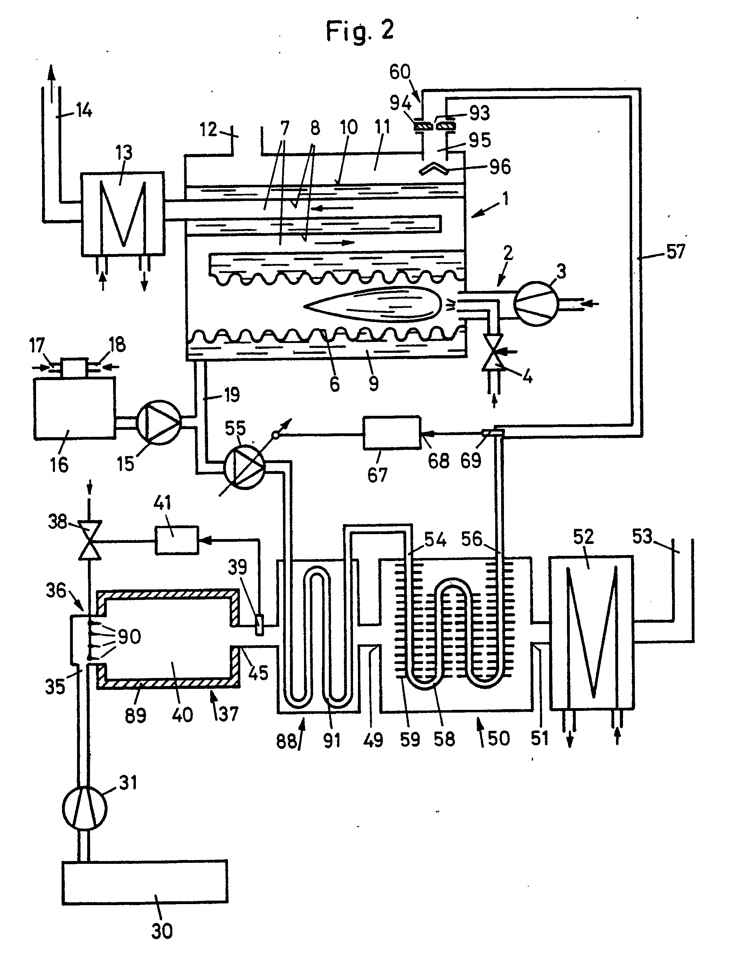

In Fig. 2 ist eine weitere Ausführungsform der Erfindung dargestellt. Dabei sind gleiche Teile mit gleichen Bezugszeichen versehen, so dass sich eine detaillierte Beschreibung dieser Teile und ihrer Funktion erübrigt. Die Ausführungsform nach Fig. 2 unterscheidet sich von jener nach Fig. 1 dadurch, dass der Gas-Gas-Wärmetauscher 33 ersetzt ist durch einen Gas-Wasser-Glattrohrwärmetauscher 88, dass die Druckmindereinrichtung 60 eine Blende 93 ist, und dass die Trenneinrichtung 75 entfällt.

Die Nachverbrennungseinrichtung 37 ist ein gegen Aussen thermisch isoliertes Stahlrohr, das innen eine Auskleidung 89 aus Schamottesteinen hat. Der Brenner 36 ist ein Flächenbrenner mit einer Vielzahl von Gasdüsen 90. Bei bekannten integrierten thermischen Nachverbrennungseinrichtungen ist die Brennkammer nicht ausgekleidet und um die zylindrische Stahlrohrwand herum sind die Rohre des Gas-Gas-Wärmetauschers 33 angeordnet. Dies hat in der Brennkamer 40 ein Temperaturgefälle zur Wand hin zur Folge. Die ausgekleidete Brennkammer 40 gemäss Fig. 2 ist nicht nur erleblich kostengünstiger als diese bekannten integrierten Einrichtungen, sondern sie gewährleistet überdies eine über den gesamten Querschnitt der Kammer 40 gleichmässige Temperatur. Dies ermöglicht eine sichere Verbrennung der Schadstoffe der Abluft bei etwas tieferen Temperaturen als bei bekannten inte grierten thermischen Nachverbrennungseinrichtungen.

Der Glattrohrwärmetauscher 88 ist gasseitig zwischen die Nachverbrennungseinrichtung 37 und den Rippenrohrwärmetauscher 50 geschaltet und wasserseitig in Serie zum Rippenrohrwärmetauscher 50 angeschlossen. Er hat glatte, unberippte Rohre 91, deren Aussenseite durch das Reingas umspült ist. Im dargestellten Ausführungsbeispiel sind die Wärmetauscher 50, 88 auch wasserseitig in Serie geschaltet, und zwar im Gleichstrom zum durchströmenden Reingas. Für diese Gas-Wasser-Wärmetauscher ist der Unterschied im Wirkunsgrad zwischen Gleichstrom und Gegenstrom unbedeutend. Jedoch ist es bei der Ausführungsform nach Fig. 2 wichtig, dass trotz der hohen Gas-Eintrittstemperatur von etwa 750° C das Wasser in den Rohren 91 nirgends zum Sieden kommt. Diesem Zweck dient vor allem die unberippte Aussenseite der Rohre 91. Dadurch werden örtliche Temperaturspitzen an der Rohrwand vermieden. Durch die Gleichstromschaltung kann die Wandtemperatur im Wärmetauscher 88 zusätzlich etwas gesenkt werden. Es ist jedoch auch möglich, die Wärmetauscher 50, 88 im Gegenstrom zu betreiben oder wasserseitig parallel statt in Serie zu schalten. Der Gas-Wasser-Wärmetauscher 88 hat bedeutend tiefere Wandtemperaturen als der Gas-Gas-Wärmetauscher 33, so dass die bei hohen Temperaturen auftretenden Materialprobleme vermieden werden. Wegen der erheblich grösseren Temperaturdifferenz zwischen Reingas und Wärmetauscherflächen können diese Flächen stark reduziert werden, so dass der Wärmetauscher 88 wesentlich kleiner und billiger ist als der Wärmetauscher 33. Bei der Ausführungsform nach Fig. 2 wird mehr Dampf erzeugt als bei jener nach Fig. 1. Weil die Abluft der Schadstoffquelle 30 nicht vorgewärmt wird, ist entsprechend mehr Brennstoff im Brenner 36 zur Erhaltung der Temperatur von 750° C erforderlich. Die Ausführungsform nach Fig. 2 eignet sich daher für Anlagen, in welchen der Dampfkessel 1 eine höhere Grundlast hat.

Die Blende 93 ist in einer austauschbaren Platte 94 direkt am Eintritt 95 der Leitung 57 in den Dampfraum 11 des Dampfkessels 1 montiert. Der aus der Blende 93 mit hoher Geschwindigkeit austretende, überhitzte Wasserstrahl wird durch eine Prallplatte 96 verzögert und aufgefächert. Der Wasserstrom trifft daher als Schleier auf die Wasseroberfläche 10 und stört die natürliche Wasserkonvektion im Kessel 1 kaum.

Die Wirkungsweise der Anlage nach Fig. 2 entspricht jener nach Fig. 1, wobei allerdings die Leistung der Pumpe 55 erhöht ist.

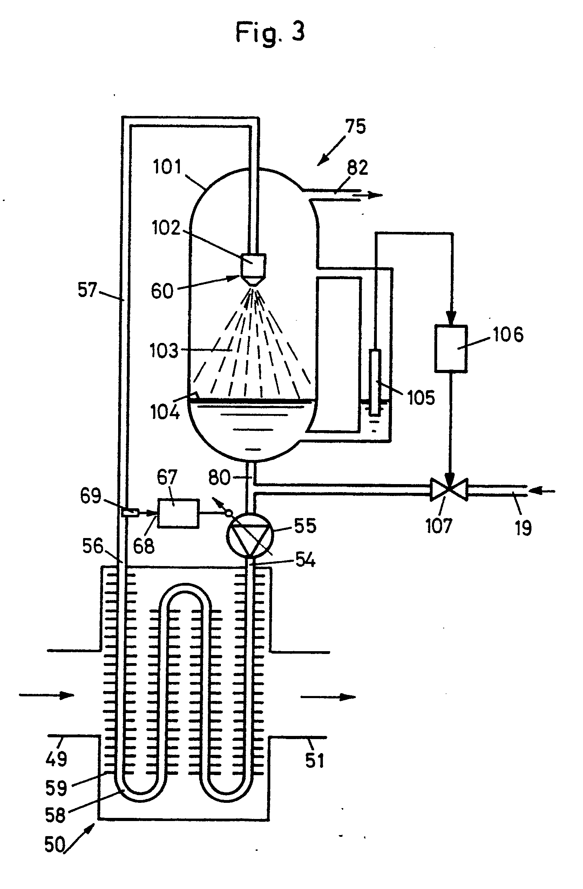

In Fig. 3 ist ein Teil einer Ausführungsform dargestellt, welche sich bei grösserer Entfernung zwischen dem Dampfkessel und thermischen Nachverbrennungseinrichtung eignet. Die Trenneinrichtung 75 ist hier als hochkantstehendes, zylindrisches Druckgefäss 101 ausgebildet und unmittelbar beim Rippenrohrwärmetauscher 50 angeordnet. Die Leitung 57 aus dem Wärmetauscher 50 ist von oben in dieses Gefäss 101 eingeführt und endet in einer nach unten gerichteten Vollkegel-Sprühdüse 102, welche hier die Druckmindereinrichtung 60 bildet. Die Düse 102 versprüht das zirkulierende Wasser in einem vollkegeligem Strahl 103, so dass eine sehr grosse Wasseroberfläche entsteht und die Verdampfung geräuscharm ist. Die Wasseroberfläche 104 im Gefäss 101 wird durch einen Niveaufühler 105 gemessen, der über einen Regler 106 ein Proportionalventil 107 steuert. Das Ventil 107 ist zwischen die Speisewasserleitung 19 und die Saugseite der Pumpe 55 geschaltet. Die Wasserleitung 80 aus der Trenneinrichtung 75 ist direkt mit der Saugseite der Pumpe 55 verbunden. Bei dieser Ausführungsform wird auch die Kesselspeisung in bekannter Weise durch ein Proportionalventil zwischen der Speiseleitung 19 und dem Wasserraum 9 des Kessels 1 geregelt, das durch das Wasserniveau 10 im Kessel geregelt ist. Die Speisepumpe 15 läuft hier konstant und erzeugt an beiden Speiseventilen, nämlich jenem zum Kessel 1 und dem Ventil 107 einen Ueberdruck gegenüber dem Kesseldruck. Die Dampfleitung 82 aus der Trenneinrichtung 75 kann zum Dampfraum 11 des Dampfkessels 1 geführt, direkt an das örtlich vorhandene Dampfnetz oder an einen örtlichen Verbraucher angeschlossen sein.

Der Regler 67 für die Pumpe 55 kann auch weggelassen werden und die Leistung der Pumpe 55 auf die maximal abzuführende Wärmemenge ausgelegt sein. Die Ausführungsform nach Fig. 3 eignet sich auch für die Anlage nach Fig. 2 mit einem vorgeschalteten Glattrohr-Wärmetauscher 88.

Die beschriebene Wärmerückgewinnungseinrichtung umfassend den an einen Dampfkessel 1 angeschlossenen Kreislauf mit der Pumpe 55, dem Wärmetauscher 50 und der Druckmindereinrichtung 60 kann auch zur Rückgewinnung von Abwärme aus einer anderen Heissgasquelle als einer TNV sinnvoll eingesetzt werden. Beispielsweise eignet sie sich auch zur Wärmerückgewinnung aus den Rauchgasen des Kessels 1. Bei dieser Anwendung würde der Wärmetauscher 50 zwischen den Rauchgasaustritt aus dem Kessel 1 und den Wärmetauscher 13 geschaltet. Dadurch kann das Abgas des Kessels 1 von einer Temperatur von z.B. 250° C auf z.B. 200° C abgekühlt und damit direkt Dampf produziert und der Brenner 2 entsprechend entlastet werden. Diese Variante ist besonders interessant, wenn die Abwärme des Kessels 1 sonst nicht sinnvoll genutzt werden kann, z.B. zur Erwärmung von Brauchwasser.

## Ansprüche

1. Einrichtung zur Rückgewinnung der Wärme von heissen Gasen aus einer Heissgasquelle (37), umfassend einen Gas- Wasser-Rippenrohrwärmetauscher (50), dessen wasserseitiger Eintrittsanschluss (54) über eine Pumpe (55) an den Wasserraum (9) eines Dampfkessels (1) angeschlossen ist, und dessen wasserseitiger Austrittsanschluss (56) über eine Druckmindereinrichtung (60) mit dem Wasser-Dampf-Kreislauf des Dampfkessels (1) verbunden ist.

2. Einrichtung nach Anspruch 1, wobei stromabwärts der Druckmindereinrichtung (60) eine Trenneinrichtung (75) zum Trennen von Wasser und Dampf angeordnet ist und stromabwärts der Trenneinrichtung (75) Wasser und Dampf über separate Leitungen (80,82) in den Wasser-Dampf-Kreislauf des Dampfkessels (1) zurückgeführt sind.

3. Einrichtung nach Anspruch 2, wobei die Trenneinrichtung (75) als Zentrifugalabschneider mit einer Kammer (76) mit kreisförmigen Querschnitt ausgebildet ist, in deren Kammerwand (78) eine Verbindungsleitung zur Druckmindereinrichtung (60) tangential mündet.

4. Einrichtung nach einem der Ansprüche 1 bis 3, wobei die Pumpe (55) regelbar ist und ein Regler (67) die Pumpenleistung in Abhängigkeit der Wassertemperatur stromabwärts des Rippenrohrwärmetauschers (50) steuert.

5. Einrichtung nach einem der Ansprüche 1 bis 4, wobei die Druckmindereinrichtung (60) ein Druckreduzierventil (61), eine Blende (93) oder eine Vollkegelsprühdüse (102) ist.

6. Einrichtung nach Anspruch 5, wobei die Druckmindereinrichtung (60) regelbar ist.

7. Einrichtung nach Anspruch 6, wobei die Druckmindereinrichtung (60) durch einen weiteren Regler (62) in Abhängigkeit der Wassertemperatur stromaufwärts der Druckmindereinrichtung (60) aber stromabwärts des Rippenrohrwärmetauschers (50) geregelt ist.

8. Einrichtung nach einem der Ansprüche 1 bis 7, wobei gasseitig stromaufwärts des Rippenrohrwärmetauschers (50) ein Gas- Wasser- Glattrohrwärmetauscher (88) angeordnet ist, der wasserseitig mit der Pumpe (55) und der Druckmindereinrichtung (60) verbunden ist.

9. Anlage zur Reinigung von schadstoffbelasteter Abluft durch thermische Nachverbrennung, umfassend eine thermische Nachverbrennungseinrichtung (37) mit einer Brennkammer (40), einem Ablufteintritt (35), einer Brennstoffzufuhr (38) und einem Reingasaustritt (45), sowie eine an den Reingasaustritt (45) angeschlossene Einrichtung gemäss einem der Ansprüche 1 bis 8.

10. Anlage nach Anspruch 9 mit einer Einrichtung nach Anspruch 8, wobei die Brennkammer (40) eine thermisch isolierende Auskleidung (89) aufweist.

# Fig. 1

# Fig. 2

# Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 844 233 (J.K. FISHBACK) <br> * Figur 1; Spalte 4, Zeile 14 - Spalte 5, Zeile 31 * <br> — — — | 1,9 | F 23 <br> G 5/46 |
| A | GB-A-2 053 432 (B & K MACHINERY INT.) <br> — — — | | |
| A | US-A-3 829 285 (J.J. BECK) <br> — — — — — | | |
| | | | **RECHERCHIERTE SACHGEBIETE (Int. Cl.5)** |
| | | | F 23 G <br> B 01 D |
| | Der vorliegende Recherchenbericht wurde für alle Patentansprüche erstellt | | |

| Recherchenort | Abschlußdatum der Recherche | Prüfer |
|---|---|---|
| Den Haag | 21 Februar 91 | BOGAERTS M.L.M. |